Europäisches Patentamt

European Patent Office

Office européen des brevets

(11) Numéro de publication : **0 112 788
B1**

# (12) FASCICULE DE BREVET EUROPÉEN

(45) Date de publication du fascicule du brevet :
29.07.87

(21) Numéro de dépôt : 83440008.7

(22) Date de dépôt : 31.01.83

(51) Int. Cl.⁴ : **B 23 B 31/04**, B 23 C   5/26

(54) **Dispositif de blocage et/ou de serrage d'outils ou similaires.**

(30) Priorité : 24.12.82 FR 8221852

(43) Date de publication de la demande :
04.07.84 Bulletin 84/27

(45) Mention de la délivrance du brevet :
29.07.87 Bulletin 87/31

(84) Etats contractants désignés :
AT BE CH DE GB IT LI LU NL SE

(56) Documents cités :
BE-A-   449 641
CH-A-   537 770
DE-A- 2 234 389
DE-A- 2 328 176
DE-A- 2 632 435
DE-A- 3 019 970
DE-U- 7 513 937
FR-A- 1 595 136

(73) Titulaire : **Pfalzgraf, Emile**
**7, rue de Neuwiller**
**F-67330 Bouxwiller (FR)**

(72) Inventeur : **Pfalzgraf, Emile**
**7, rue de Neuwiller**
**F-67330 Bouxwiller (FR)**

(74) Mandataire : **Nuss, Pierre**
**10, rue Jacques Kablé**
**F-67000 Strasbourg (FR)**

EP 0 112 788 B1

Jouve, 18, rue St-Denis, 75001 Paris, France

## Description

La présente invention concerne le domaine du blocage et/ou du serrage d'attachements modulaires de têtes, de barres d'alésage, de pièces intermédiaires d'adaptateurs, de porte-outils, de mandrins à pompe, de pinces longues, ou d'autres pièces mécaniques, et a pour objet un dispositif destiné à cet effet.

Il existe actuellement divers dispositifs de fixation par vis du type à pointeau permettant d'effectuer un tel blocage ou serrage, ces vis présentant des angles en bout variant de 30° à 90° et étant bloquées dans un trou situé dans l'axe de la vis ou déporté par rapport à cet axe. En outre, il existe également des dispositifs de fixation sur plat par vis inclinée, par goupille, ou par clavetage.

Cependant, ces dispositifs de blocage et/ou de serrage connus ne permettent généralement que la fixation d'un type d'attachement bien précis, un attachement différent nécessitant obligatoirement un dispositif différent.

Il existe également des dispositifs de ce type, dans lesquels une vis à bout sphérique, fixée sur l'arbre entraîneur à une distance donnée de la face d'application de la pièce à entraîner coopère avec une gorge longitudinale de même section prévue sur la pièce à entraîner, et qui s'étend avec une inclinaison par rapport à la génératrice de ladite pièce. Dans un tel dispositif, la distance du fond de la rainure à la face d'application de la pièce à entraîner est inférieure à celle de la vis à ladite face.

Ces dispositifs ne permettent cependant pas la transmission de puissances importantes du fait qu'ils ne peuvent pas assurer un serrage face contre face suffisamment puissant, en particulier par auto-serrage.

On connaît également, par DE-A-2 328 176, un procédé et un dispositif destinés uniquement à la fixation de fraises comportant un filetage intérieur. Le dispositif décrit dans ce document n'est cependant pas comparable au dispositif conforme à l'invention, dont la constitution est obligatoirement différente, du fait qu'il est destiné à la fixation d'éléments les plus divers.

La présente invention a pour but de pallier ces inconvénients.

Elle a pour objet un dispositif de blocage et/ou de serrage d'outils ou similaires, comprenant un arbre entraîneur présentant un alésage cylindrique ; une pièce à entraîner présentant une projection cylindrique coaxiale avec cet alésage ; une ou plusieurs vis de fixation disposées à intervalles angulaires réguliers, dans la paroi de l'alésage cylindrique sur une même circonférence de l'alésage à une distance donnée de sa face de contact avec la pièce à entraîner ; et un ou plusieurs logements prévus sur la projection cylindrique et coopérant avec la ou les vis, caractérisé en ce que chaque vis a une extrémité sphérique, et en ce que les logements présentent une section demi-cylindrique de plus grand rayon que celui des vis, de sorte que l'entraînement en rotation de ladite pièce à entraîner a pour effet un auto-serrage de la face de cette dernière contre la face de contact de l'arbre entraîneur.

Conformément à une caractéristique préférée de l'invention, la pièce à entraîner ou adaptateur est munie d'un tenon d'entraînement destiné à coopérer avec un logement de l'arbre entraîneur présentant une largeur supérieure à celle du tenon de manière à permettre une légère rotation relative entre arbre entraîneur et adaptateur favorisant l'auto-serrage.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue partielle, en élévation latérale et en coupe, d'un bout d'arbre, mandrin, ou attachement, et d'une pièce à entraîner ou adaptateur munis du dispositif conforme à l'invention ;

les figures 2 et 3 sont des vues au niveau des faces d'application du bout d'arbre et de la pièce à entraîner ou adaptateur, partiellement en coupe transversale au niveau des éléments de fixation, respectivement en position de montage et de serrage et en position de travail et d'auto-serrage, et

les figures 4 à 19 représentent diverses variantes de réalisation d'un adaptateur, en élévation longitudinale et en élévation frontale, partiellement en coupe.

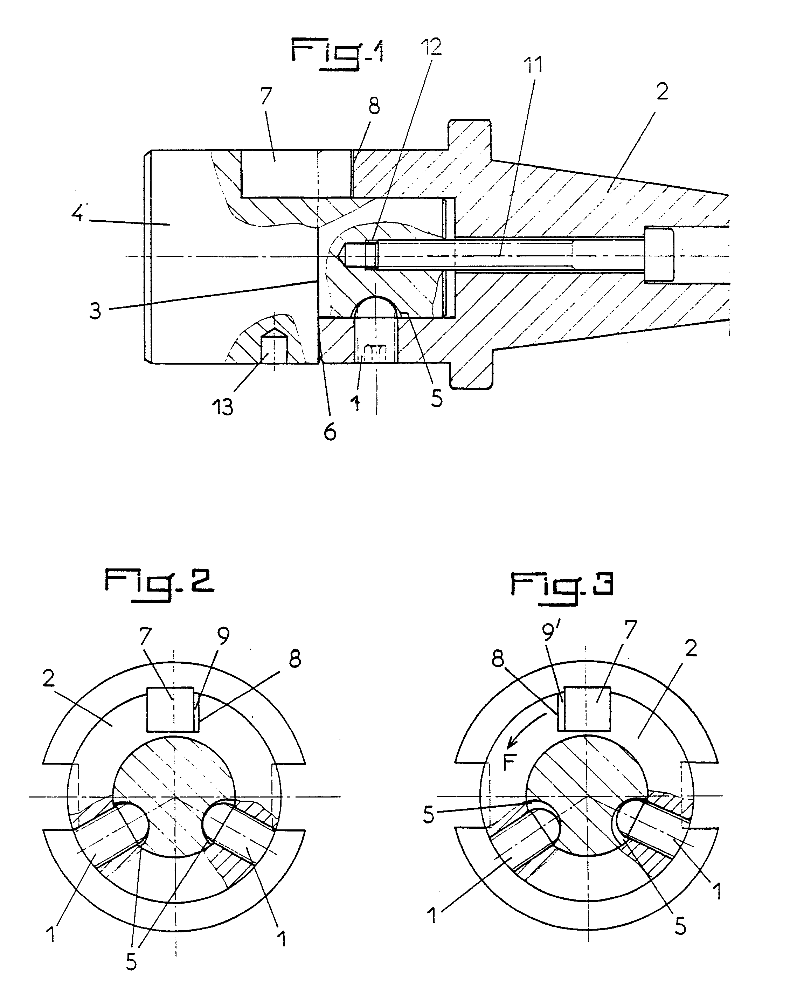

Conformément à l'invention, et comme le montrent plus particulièrement, à titre d'exemple, les figures 1 à 3 des dessins annexés, le dispositif de blocage et/ou de serrage d'outils ou similaires, comprenant un arbre entraîneur 2 présentant un alésage cylindrique ; une pièce à entraîner 4 présentant une projection cylindrique coaxiale avec cet alésage ; une ou plusieurs vis de fixation 1 disposées à intervalles angulaires réguliers, dans la paroi de l'alésage cylindrique sur une même circonférence de l'alésage à une distance donnée de sa face de contact 3 avec la pièce à entraîner ; et un ou plusieurs logements 5 prévus sur la projection cylindrique et coopérant avec la ou les vis, est caractérisé en ce que chaque vis a une extrémité sphérique, et en ce que les logements 5 présentent une section demi-cylindrique de plus grand rayon que celui des vis 1, de sorte que l'entraînement en rotation de ladite pièce à entraîner a pour effet un auto-serrage de la face 3 de cette dernière contre la face de contact 6 de l'arbre entraîneur 2.

En effet, l'axe des vis 1 étant à une distance supérieure de la face 6 à celle de l'axe des logements 5, une rotation de l'arbre 2 par rapport à l'adaptateur 4 produit un effet de coincement tendant à pousser la tête sphérique des vis 1 vers le fond des logements 5, et ainsi, à serrer davantage les faces 3 et 6 l'une contre l'autre, de sorte qu'un broutage en cours de travail est impossible.

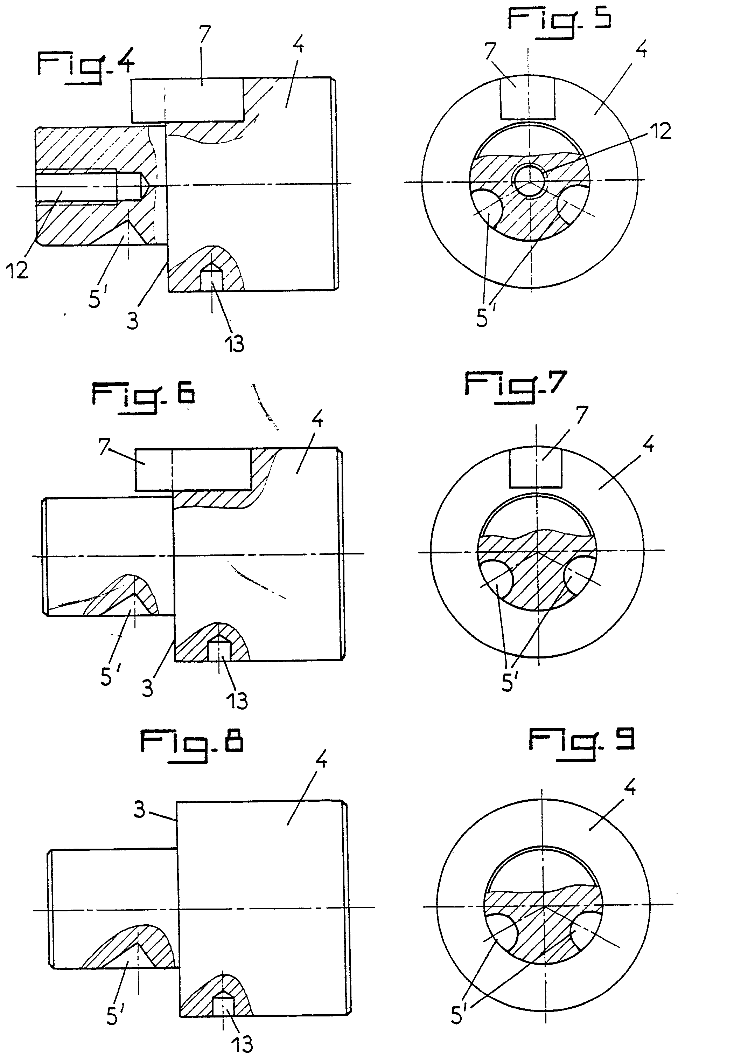

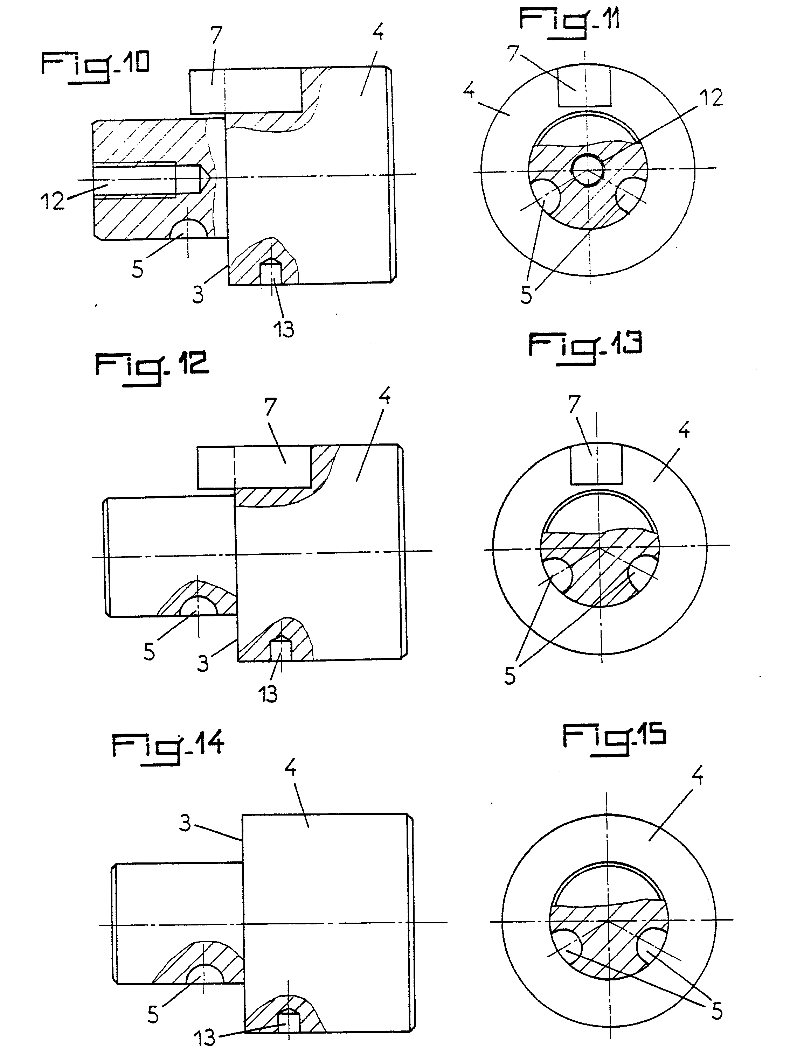

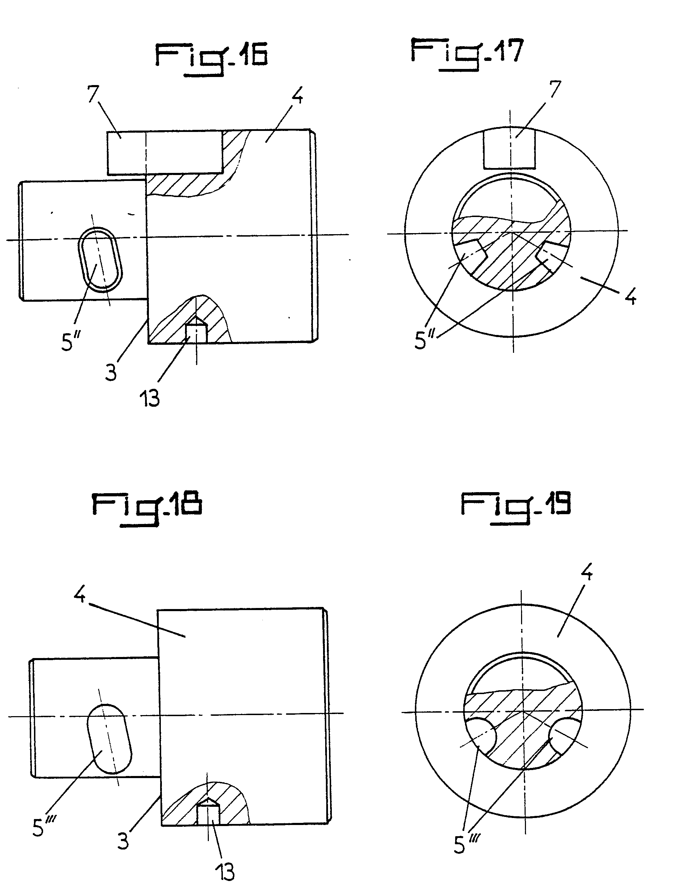

L'adapteur 4 peut, en outre, être pourvu d'un tenon d'entraînement 7 (figures 1 à 7, 10 à 13 et 16-17), qui est destiné à coopérer avec un logement 8 de l'arbre entraîneur 2. Ce logement 8 présente une largeur supérieure à celle du tenon 7, de sorte qu'une légère rotation relative est possible entre l'adapteur 4 et l'arbre 2 favorisant l'effet d'auto-serrage des vis 1 et des logements 5 comme représenté plus particulièrement aux figures 2 et 3. En effet, la figure 2 représente en élévation frontale la position de l'adapteur 4 dans l'arbre 2 lors de son serrage au montage, une fente 9 subsistant dans le logement 8 à droite du tenon 7, et les vis 1 étant centrées dans les logements 5 de l'arbre 2. En position de travail, l'arbre 2 tourne dans le sens de la flèche F de sorte que la fente 9' est déplacée à gauche du tenon 7 et que les vis 1 se coincent par leur tête contre la partie droite du fond des logements 5 correspondants (figure 3). En effet, en début de travail une légère rotation de l'adapteur 4 dans l'arbre 2 déplace le tenon 7 dans le logement 8 vers la droite, et les vis se coincent sur un côté de leur logement provoquant l'auto-serrage. Les logements des vis 1 dans l'adapteur 4 sont sous forme d'un perçage 5 à bout sphérique de rayon supérieur à celui des vis 1 (figures 1 à 3 et 10 à 15). Ce mode de réalisation permet un bon effet d'auto-serrage lors de l'utilisation, les vis 1 étant serrées sur le fond des logements 5 au montage et étant déplacées vers une paroi des logements 5' lors de l'utilisation.

Selon un autre mode de réalisation, et comme le montrent les figures 4 à 9, les adapteurs 4 sont pourvus de deux logements 5' en forme de rainures longitudinales inclinées à section ou fond semi-cylindrique placés avantageusement à 120°. Cependant, il est également possible de prévoir un plus grand nombre de logements 5' et de vis 1 disposés à des angles différents.

Les figures 16 et 17 représentent un autre mode de réalisation des logements de l'adapteur 4, dans lequel chaque logement 5" se présente sous forme d'un trou oblong à section transversale trapézoïdale incliné par rapport à la face d'application 3 de l'adapteur 4, les vis de fixation 1 correspondantes présentant une extrémité tronconique. Les figures 18 et 19 représentent une autre variante de réalisation de l'invention, dans laquelle chaque logement 5''' est sous forme d'un trou oblong incliné par rapport à la face 3 de l'adapteur 4 et présentant une section droite demi-cylindrique (figure 19). Dans ce mode de réalisation, il est également possible de prévoir un entraînement complémentaire par tenon.

Dans ces deux modes de réalisation, une légère rotation de l'adapteur 4 dans l'arbre 2 au début du travail provoque un serrage très important et une forte application mutuelle des faces 3 et 6 entre elles.

Afin de faciliter son desserrage, chaque adapteur est muni à sa circonférence d'un trou 13 pour son actionnement au moyen d'une clé à ergot (figures 4, 6, 8, 10, 12, 14, 16 et 18).

Pour la transmission de puissances relativement faibles, les adapteurs 4 pourront être munis uniquement, comme le montrent les figures 8, 9 et 14, 15, de deux logements 5, sans entraînement supplémentaire par tenon.

La fixation des adapteurs 4 dans l'arbre entraîneur 2, ou attachement s'effectue toujours par centrage de l'adapteur 4 dans l'alésage de l'attachement par présentation des logements 5 en face des vis 1. Dans le cas de présence d'un tenon 7, ce dernier est appliqué dans son logement 8 contre la face de gauche de ce dernier (figure 2), puis les vis sont serrées.

La différence de largeur entre tenon 7 et logement 8 peut être calculée en fonction de la force d'autoserrage à obtenir pour un fonctionnement optimal. En outre, le tenon 7 assure également une limitation dudit auto-serrage afin que celui-ci n'empêche pas un déblocage avec les moyens habituels.

Grâce à l'invention, il est possible de réaliser des ensembles modulaires pouvant être utilisés sur centres d'usinage et dans des ateliers flexibles, aussi bien pour le perçage, que pour le fraisage, le taraudage, ou l'alésage. Les ensembles ainsi réalisés permettent la transmission de toute la puissance disponible de la broche de la machine grâce à un serrage puissant face contre face obtenu par auto-serrage au début du travail. En outre, de tels ensembles sont facilement accessibles pour le montage et le démontage par l'avant.

## Revendications

1. Dispositif de blocage et/ou de serrage d'outils ou similaires, comprenant un arbre entraîneur (2) présentant un alésage cylindrique ; une pièce à entraîner (4) présentant une projection cylindrique coaxiale avec cet alésage ; une, ou plusieurs vis de fixation (1) disposées à intervalles angulaires réguliers, dans la paroi de l'alésage cylindrique sur une même circonférence de l'alésage à une distance donnée de sa face de contact (3) avec la pièce à entraîner ; et un ou plusieurs logements (5) prévus sur la projection cylindrique et coopérant avec la ou les vis, caractérisé en ce que chaque vis a une extrémité sphérique, et en ce que les logements (5) présentent une section demi-cylindrique de plus grand rayon que celui des vis (1), de sorte que l'entraînement en rotation de ladite pièce à entraîner a pour effet un auto-serrage de la face (3) de cette dernière contre la face de contact (6) de l'arbre entraîneur (2).

2. Dispositif, suivant la revendication 1, caractérisé en ce que la pièce à entraîner ou adapteur (4) est munie d'un tenon d'entraînement (7) destiné à coopérer avec un logement (8) de l'arbre entraîneur (2) présentant une largeur supérieure à celle du tenon (7) de manière à permettre une légère rotation relative entre arbre entraîneur (2) et adapteur (4) favorisant l'auto-serrage.

3. Dispositif, suivant la revendication 1, caractérisé en ce que les logements des vis (1) dans l'adapteur (4) sont sous forme d'un perçage (5) à bout sphérique de rayon supérieur à celui des vis (1).

4. Dispositif, suivant la revendication 1, caractérisé en ce que les logements des vis (1) dans l'adapteur (4) sont sous forme de rainures longitudinales inclinées (5') à fond demi-cylindrique.

5. Dispositif de blocage et/ou de serrage d'outils ou similaires, comprenant un arbre entraîneur (2) présentant un alésage cylindrique ; une pièce à entraîner (4) présentant une projection cylindrique coaxiale avec cet alésage ; une, ou plusieurs vis de fixation (1) disposées à intervalles angulaires réguliers, dans la paroi de l'alésage cylindrique sur une même circonférence de l'alésage à une distance donnée de sa face de contact (3) avec la pièce à entraîner ; et un ou plusieurs logements (5") prévus sur la projection cylindrique et coopérant avec la ou les vis, caractérisé en ce que chaque vis a une extrémité tronconique, et en ce que les logements (5") se présentent chacun sous forme d'un trou oblong à section transversale trapézoïdale incliné par rapport à la face d'application (3) de l'adapteur (4).

6. Dispositif, suivant la revendication 1, caractérisé en ce que chaque logement (5") est sous forme d'un trou oblong incliné par rapport à la face (3) de l'adapteur (4) et présentant une section droite demi-cylindrique.

7. Dispositif, suivant l'une quelconque des revendications 1 à 6, caractérisé en ce que, afin de faciliter son desserrage, chaque adapteur (4) est muni à sa circonférence, d'un trou (13) pour son actionnement au moyen d'une clé à ergot.

## Claims

1. A device for locking and/or clamping tools or the like, comprising a driving shaft (2) having a cylindrical bore ; a driven member (4) having a cylindrical projection coaxial with this bore ; one or more fastening screws (1) arranged at regular angular intervals in the wall of the cylindrical bore over one and the same circumference of the bore at a given distance from its contact face (3) with the driven member ; and one or more recesses (5) provided in the cylindrical projection and cooperating with the screw or screws, characterised in that each screw has a spherical end, and in that the recesses (5) have a semi-cylindrical section of larger radius than that of the screws (1), in such a manner that rotational driving of said driven member has the effect of self-clamping of the face (3) of the latter against the contact face (6) of the driving shaft (2).

2. A device, according to claim 1, characterised in that the driven member or adapter (4) is equipped with a driving tenon (7) adapted to cooperate with a recess (8) in the driving shaft (2) having a width greater than that of the tenon (7) in such a manner as to permit a slight relative rotation between driving shaft (2) and adapter (4), promoting the self-clamping.

3. A device, according to claim 1, characterised in that the recesses for the screws (1) in the adapter (4) are in the form of a hole (5) having a spherical end with a radius larger than that of the screws (1).

4. A device, according to claim 1, characterised in that the recesses for the screws (1) in the adapter (4) are in the form of longitudinal inclined grooves (5') having a semi-cylindrical bottom.

5. A device for locking and/or clamping tools or the like, comprising a driving shaft (2) having a cylindrical bore ; a driven member (4) having a cylindrical projection coaxial with this bore ; one or more fastening screws (1) disposed at regular angular intervals in the wall of the cylindrical bore over one and the same circumference of the bore at a given distance from its contact face (3) with the driven member ; and one or more recesses (5") provided in the cylindrical projection and cooperating with the screw or screws, characterised in that each screw has a frustoconical end, and in that the recesses (5") each appear in the form of an oblong hole with a trapezoidal cross-section which is inclined in relation to the application face (3) of the adapter (4).

6. A device, according to claim 1, characterised in that each recess (5''') is in the form of an oblong hole inclined in relation to the face (3) of the adapter (4) and having a semi-cylindrical cross-section.

7. A device, according to any one of claims 1 to 6, characterised in that, in order to facilitate its release, each adapter (4) is equipped, at its circumference, with a hole (13) for its actuation by means of a pin wrench.

## Patentansprüche

1. Aufspann- und/oder Klemmvorrichtung für Werkzeuge oder ähnliches, bestehend aus einer eine Zylinderbohrung aufweisenden Mitnehmerwelle (2) ; einem einen mit dieser Bohrung koaxialen, zylindrischen Überstand aufweisenden, mitzunehmenden Stück (4) ; einer oder mehreren Befestigungsschrauben (1), die in regelmäßigen Winkelabständen in der Wand der Zylinderbohrung an einem gleichen Umkreis der Bohrung in einem gegebenen Abstand von ihrer Kontaktfläche (3) mit dem mitzunehmenden Stück angeordnet sind ; einer oder mehreren Aufnahmen (5), die an dem zylindrischen Überstand vorgesehen sind und mit der oder den Schrauben zusammenwirken, dadurch gekennzeichnet, daß jede Schraube ein kugelförmiges Ende besitzt, und daß die Aufnahmen (5) einen halbzylindrischen Querschnitt mit größerem Radius als dem der Schrauben (1) aufweisen, so daß die Mitnahme in Rotation des besagten mitzunehmenden Stücks eine Selbstschließung der Fläche (3) dieses letzteren mit der Kontaktfläche (6) der Mitnehmerwelle (2) bewirkt.

2. Vorrichtung nach Anspruch 1, dadurch gekennzeichnet, daß das mitzunehmende Stück oder Adapter (4) mit einem Mitnehmer (7) versehen ist, der dazu dient, mit einer eine größere Weite als der Mitnehmer (7) aufweisenden Aufnahme (8) der Mitnehmerwelle (2) zusammenzuarbeiten, um eine leichte, relative Drehung zwischen der Mitnehmerwelle (2) und dem Adapter (4) zu ermöglichen, wodurch die selbstschließung begünstigt wird.

3. Vorrichtung nach Anspruch 1, dadurch gekennzeichnet, daß die Aufnahmen der Schrauben (1) in dem Adapter (4) als eine Bohrung (5) mit Rundkuppe mit größerem Radius als dem der Schrauben (1) ausgebildet sind.

4. Vorrichtung nach Anspruch 1, dadurch gekennzeichnet, daß die Aufnahmen der Schrauben (1) in dem Adapter (4) als schräggestellte Längsnuten (5') mit halbzylindrischem Boden ausgebildet sind.

5. Aufspann- und/oder Klemmvorrichtung für Werkzeuge oder ähnliches, bestehend aus einer eine Zylinderbohrung aufweisenden Mitnehmerwelle (2) ; einem einen mit der Bohrung koaxialen, zylindrischen Überstand aufweisenden, mitzunehmenden Stück (4) ; einer oder mehreren Befestigungsschrauben (1), die in regelmäßigen Winkelabständen in der Wandung der Zylinderbohrung an einem gleichen Umkreis der Bohrung in einem gegebenen Abstand von ihrer Kontaktfläche (3) mit dem mitzunehmenden Stück angeordnet sind ; und einer oder mehreren Aufnahmen (5"), die an dem zylindrischen Überstand vorgesehen sind und mit der oder den Schrauben zusammenwirken, dadurch gekennzeichnet, daß jede Schraube ein kegelstumpfförmiges Ende besitzt, und daß die Aufnahmen (5") sich jeweils als ein in bezug auf die Ansatzfläche (3) des Adapters (4) geneigtes Langloch mit trapezförmigem Querschnitt darstellen.

6. Vorrichtung nach Anspruch 1, dadurch gekennzeichnet, daß jede Aufnahme (5''') als in bezug auf die Fläche (3) des Adapters (4) geneigtes, Langloch ausgebildet ist und einen halbzylindrischen Querschnitt aufweist.

7. Vorrichtung nach einem der Ansprüche 1 bis 6, dadurch gekennzeichnet, daß, um seine Lockerung zu erleichtern, jeder Adapter (4) an seinem Umfang mit einem Loch (13) für seine Betätigung mittels eines Hakenschlüssels ausgestattet ist.

Fig-1

Fig.2

Fig.3

1

Fig. 4

Fig. 5

Fig. 6

Fig. 7

Fig. 8

Fig. 9

0 112 788

Fig.10

Fig.11

Fig.12

Fig.13

Fig.14

Fig.15

3

Fig. 16

Fig. 17

Fig. 18

Fig. 19